# EUROPEAN PATENT APPLICATION

(11) **EP 1 473 069 A1**
(43) Date of publication of application: **03.11.2004**
(21) Application number: 04252549.3
(22) Date of filing: 30.04.2004
(51) Int. Cl.: B01D 29/60, B01D 35/143

(54) **Apparatus for and method of monitoring the condition of a filter element**

(30) Priority: 02.05.2003 US 428590
(71) Applicant: Arvin Technologies, Inc., Troy, MI 48084 (US)
(72) Inventor: Bhardwaj, Arun K., Fayetteville, North Carolina NC 28306 (US); Ollis, Danny R., Fayetteville, North Carolina NC 28306 (US); Semrad, Robert E., North Carolina NC 28304 (US)
(74) Representative: Croston, David

(57) **Abstract**

A filter system including a filter assembly having a housing, a filter element disposed within the housing, an inlet passage extending through the housing, and an outlet passage extending through the housing, the outlet passage in communication with the inlet passage through the filter element; and an element condition monitoring assembly including an inlet pressure transducer in communication with the inlet passage, an outlet pressure transducer in communication with the outlet passage, and a microprocessor linked to the inlet and outlet pressure transducers. The inlet pressure transducer gauges the pressure in the inlet passage, and the outlet pressure transducer gauges the pressure in the outlet passage. The microprocessor calculates a pressure differential between the inlet and outlet pressure and calculates an element condition status using at least one element condition parameter, which may include the pressure differential.

## Description

### BACKGROUND OF THE INVENTION

### 1. Field of the Invention.

The present invention relates to filters, particularly, devices for monitoring the condition of a filter element.

### 2. Description of the Related Art.

Internal combustion engines are typically provided with filter assemblies for the purpose of filtering out particulate impurities, including metal from the wear of the engine, carbon from the combustion of fuel, and mineral dust from the intake air, all of which can cause damage to the moving parts of the engine. Such filter assemblies may include oil filters, fuel filters and air filters. Filter assemblies generally include a housing, a filter element disposed within the housing, and two passages, an inlet passage and an outlet passage, which communicate with one another through the filter element.

In circulation, unfiltered (dirty) fluid flows into the housing, and then flows through the filter element where the particulate impurities are trapped by the filter element. The resulting filtered (clean) fluid then exits the housing through the outlet passage. As the fluid is filtered through the filter element, the filter element begins to fill with impurities. When a substantial amount of impurities have been trapped by the filter element, the fluid restriction capacity of the element begins to increase. When the filter element becomes completely full, or clogged, with impurities the filter element completely restricts the movement of fluid across the filter. This causes the pressure to build up on the inlet side of the filter element, and ultimately, deprives the engine of the necessary fluid. Because the deprivation of fluid can have damaging effects on engine life and performance, some filter assemblies include a bypass valve or relief valve located between the inlet and outlet passages. When the pressure on the inlet side of the filter element reaches a certain limit, the relief valve opens allowing dirty fluid to bypass the filter element and flow directly into the outlet passage.

However, prolonged operation of an engine under this bypass condition defeats the purpose of a filter assembly. Therefore, to enhance the performance and longevity of the engine, engine manufacturers recommend that the filter element be changed at specified mileage intervals. However, this filter element replacement schedule is typically based simply on mileage, not on the actual performance or life of the filter element. In some cases, the vehicle includes an On Board Diagnostic System (OBD) that alerts the driver when the filter element should be replaced. However, these systems typically use algorithms that calculate the need for a new filter element based on mileage, rather than the actual condition of the filter element. Many factors other than mileage can affect the performance and life of the filter element, including engine speed, engine rpm, terrain of the driving environment, weather and temperature of the driving environment, quality of the fluid and filter element, the pH of the fluid, and other factors. In some cases, the manufacturer's and/or OBD's suggested filter element replacement schedule may be too conservative for the particular driving conditions. In these cases, the engine operator replaces the filter element more frequently than is necessary, and ultimately incurs additional unnecessary expenses. In other cases, the manufacturer's suggested filter element replacement schedule may be too liberal for the particular driving conditions. In this case, the engine operator does not replace the filter element as frequently as is actually necessary, which may accelerate engine wear and/or decrease engine performance.

Several systems have been proposed that determine the need for filter element and oil replacement by attempting to quantifiably assess the performance and/or life of the filter element. Most of these systems use a spring-operated differential pressure switch that engages both the inlet and outlet passages to determine the pressure differential between the two passages. Unfortunately, these system have not proven to be commercially successful. These systems often require that a different pressure differential switch be designed for each variation of filter assembly, thus making it commercially impractical to mass produce. In addition, the springs and movable parts often behave differently in different temperatures, making the system inconsistent, inaccurate and unreliable. Also, the differential pressure switch of these systems accesses both the inlet and the outlet passages. Consequently, in the event of malfunction, the inlet passage connects with the outlet passage, causing dirty fluid to bypass the filter element - through the pressure differential switch. Therefore, despite these attempts, a need remains for a durable system that accurately and effectively monitors the condition of the filter element.

### SUMMARY OF THE INVENTION

The present invention provides a filter system including a filter assembly having a housing, a filter element disposed within the housing, an inlet passage extending through the housing, and an outlet passage extending through the housing, the outlet passage in communication with the inlet passage through the filter element; and a monitoring assembly having an inlet pressure transducer in communication with and gauging an inlet pressure measurement within the inlet passage, an outlet pressure transducer in communication with and gauging an outlet pressure measurement within the outlet passage, and a microprocessor linked to the inlet and outlet pressure transducers, wherein the microprocessor receives at least one element condition measurement and calculates an element condition status using the at least one element condition parameter.

The present invention also provides a method for monitoring the condition of a filter element of a filter assembly including the steps of measuring an inlet pressure in an inlet passage of the filter assembly using an inlet pressure transducer in communication with the inlet passage; measuring an outlet pressure in an outlet passage of the fluid filter assembly using an outlet pressure transducer in communication with the outlet passage; and determining the differential pressure between the inlet pressure and the outlet pressure.

The present invention also provides a filter element condition monitoring assembly for a filter system having a housing, an element disposed within the housing, an inlet passage extending through the housing, and an outlet passage extending through the housing. The monitoring assembly includes an inlet pressure transducer communicable with the inlet passage and adapted to measure an inlet pressure in the inlet passage; an outlet pressure transducer communicable with the outlet passage and adapted to measure an outlet pressure in the outlet passage; and a microprocessor linked to the inlet and outlet pressure transducers, wherein the microprocessor receives the inlet and outlet pressure and calculates an element condition status using the inlet and outlet pressures.

### BRIEF DESCRIPTION OF THE DRAWINGS

The above-mentioned and other features and objects of this invention, and the manner of attaining them, will become more apparent and the invention itself will be better understood by reference to the following description of embodiments of the invention taken in conjunction with the accompanying drawings, wherein:

FIG. 1 is a side view of a cartridge-type fluid filter system according to one embodiment of the present invention;

FIG. 2 is a cross-section view of the fluid filter system of FIG. 1;

FIG. 3 is a front view of the fluid filter system of FIG. 1;

FIG. 4 is a schematic flow-diagram of the operation of a fluid filter system according to one embodiment of the present invention;

FIG. 5 is a schematic flow-diagram of the operation of a fluid filter system according to another embodiment of the present invention;

FIG. 6 is a cross-section view of a spin-on filter system according to one embodiment of the present invention;

FIG. 7 is a perspective view of a fuel filter system with a partial cutaway of the housing in accordance with the present invention; and

FIG. 8 is a cross-section view of an air filter system in accordance with the present invention.

### DETAILED DESCRIPTION

The embodiments hereinafter disclosed are not intended to be exhaustive or to limit the invention to the precise forms disclosed in the following description. Rather the embodiments are chosen and described so that others skilled in the art may utilize its teachings.

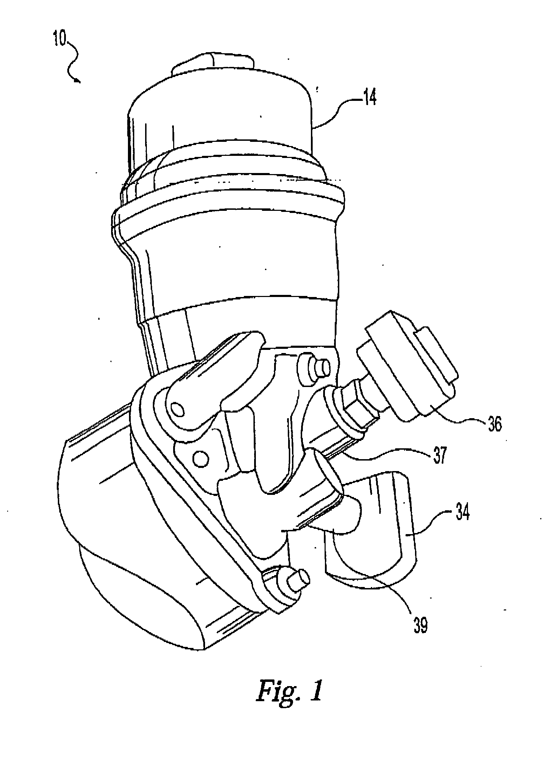

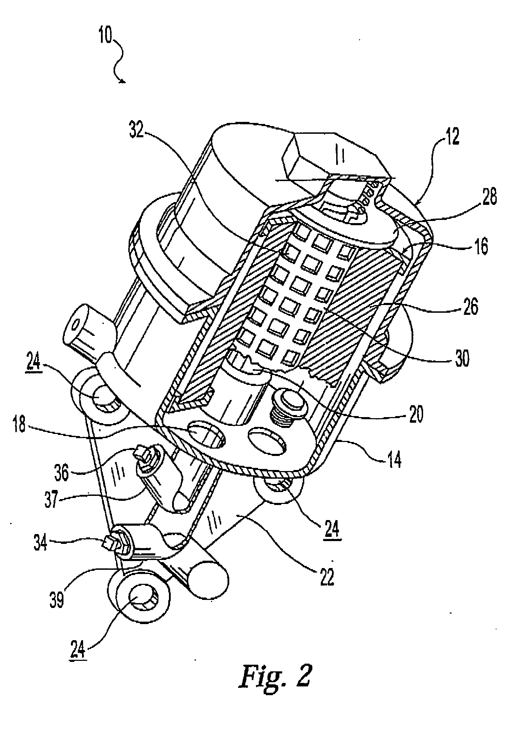

FIGS. 1-3 illustrate a fluid filter system 10 according to one embodiment of the present invention. Filter system 10 includes cartridge-type filter assembly 12 generally having housing 14, filter element cartridge 16 disposed within housing 14, at least one inlet passage 18, and an outlet passage 20. Filter assembly 12 also includes mounting flange 22 having mounting holes 24 through which mounting bolts (not shown) may extend to mount filter assembly 12 onto an engine block (not shown). When mounted on the engine block, both inlet and outlet passages 18, 20 communicate fluid between the engine and the interior of housing 14. Filter element cartridge 16 includes filter element 26, which defines a bore (not shown) in communication with outlet passage 20. As shown in FIG. 2, element 26 may be optionally mounted about cylindrical center tube 28. Center tube 28 includes a center tube wall 30 having a plurality of openings 32, which communicate with the bore and thereby, the outlet passage 20.

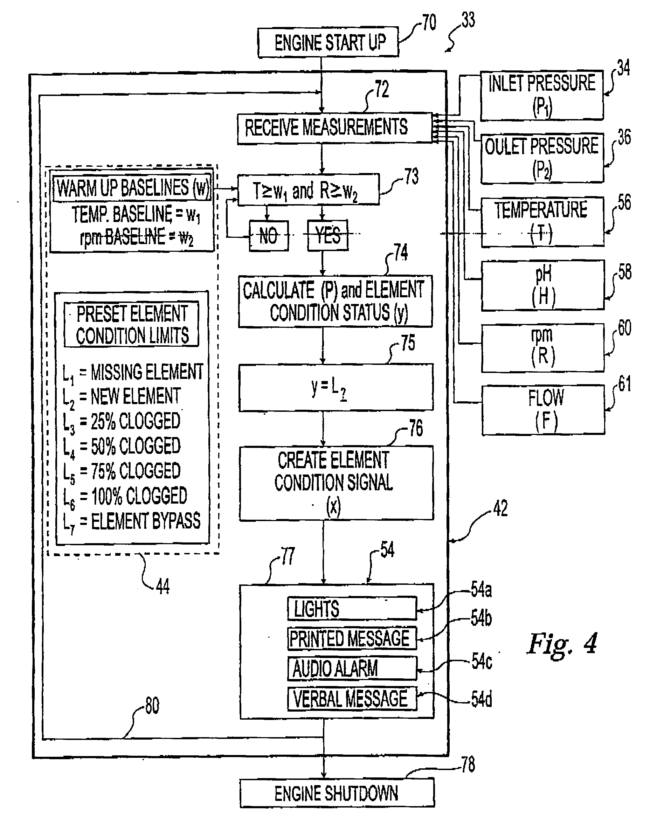

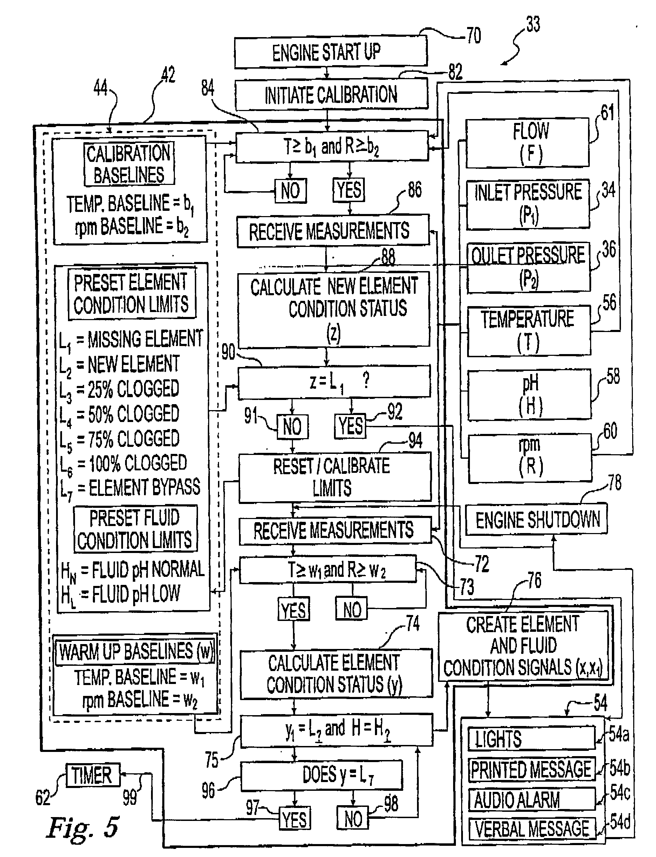

Filter system 10 also includes an element condition monitoring system 33, which is schematically illustrated in FIGS. 4 and 5. Referring back to FIGS. 1-3, monitoring system 33 includes inlet pressure transducer 34 and outlet pressure transducer 36 mounted in ports 37, 39 respectively of housing 14. Inlet and outlet pressure transducers 34, 36 communicate with corresponding inlet and outlet passages 18,20 through orifices 38, 40, respectively. It is contemplated that monitoring system 33 be installed at the time of vehicle manufacture. In this case, filter housing 14 would be manufactured to include ports 37, 39 and bushings (not shown) for sealingly receiving inlet and outlet pressure transducers 34, 36, respectively. Alternatively, monitoring system 33 may also be installed after manufacture of the vehicle by modifying the existing housing by tapping holes/ports 37, 39 into the housing and sealingly installing inlet and outlet pressure transducers 34, 36.

Referring now to FIGS. 4-5, inlet and outlet pressure transducers 34, 36 are linked to microprocessor 42- Microprocessor 42 may be a part of, or linked to, a vehicle On Board Diagnostic system (OBD) and includes software. Microprocessor 42 includes memory 44 for storing preset limits and baselines as will be further explained below. Microprocessor 42 is linked to indication means 46, which also may be a part of the OBD and which includes one or more on-board indicators 54a-d.

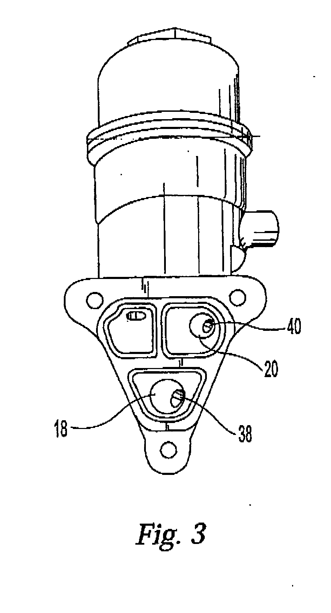

The operation of monitoring system 33 is schematically illustrated in FIGS. 4 and 5. Referring first to FIG. 4, after engine start-up 70 inlet and outlet pressure transducers 34, 36 of monitoring system 33 gauge or measure the pressures (P₁), (P₂) within respective inlet and outlet passages 18, 20 (FIGS. 2 and 3). The resulting inlet and outlet pressure measurements (P₁), (P₂) are received by microprocessor 42, as shown at 72. Inlet and outlet pressure values (P₁), (P₂) measured by inlet and outlet pressure transducers 34, 36 may initially be in analog format. In this case, monitoring system 33 may include an analog/digital (A/D) converter (not shown) for converting the analog values to digital format. Additional measurements may also be taken and transmitted to microprocessor 42. For instance, operating system 33 may also include a temperature sensor 56 for gauging the fluid temperature (T), a pH sensor 58 for gauging the fluid pH (H), an rpm sensor 60 for gauging the engine rpm (R), and a mass flow transducer 66 for gauging the flow (F) in the outlet passage.

Referring now to step 73, microprocessor 42 then determines whether certain measurements are within warm-up baselines (w) stored in memory 44. For example, microprocessor 42 compares temperature (T) and rpm (R) to warm-up baseline temperature (w₁) and warm-up baseline rpm (w₂), respectively. When temperature (T) and rpm (R) reach warm-up baselines (w₁), (w₂), respectively, microprocessor 42 moves on to step 74. It should be understood that microprocessor 42 can be configured to use one or more of a variety of different warm-up baselines (w), for instance, (w₁) could be a flow baseline or pH baseline.

Next, microprocessor 42 uses one or more mathematical equations or algorithms of the software to calculate an element condition status (y). In calculating element condition status (y), the algorithms use at least one element condition parameter, which may include inlet and outlet pressure measurements (P₁), (P₂). As shown at 74 in FIG. 4, microprocessor 42 may calculate the pressure differential (P) between inlet and outlet pressure measurements (P₁), (P₂), and then use the algorithms to calculate element condition status (y) using (P).

To further explain, in normal operation, unfiltered (dirty) fluid flows from engine to housing 14 through inlet passage 18 (FIGS. 1-3). The unfiltered fluid then passes through element 26 where particulate impurities are absorbed by element 26 and are thereby removed from the fluid. The resulting filtered (clean) fluid then passes through openings 32 into the bore and then back to the engine via outlet passage 20. As the element becomes clogged with particulate impurities the pressure begins to build on the inlet side of the filter. Consequently, the pressure differential (P) between the pressure in the inlet passage and the outlet passage increases as the filter element becomes increasingly clogged with impurities. Therefore, (P) can be used as an element condition parameter in an algorithm to accurately assess the actual condition of the element.

Other factors, besides (P), may indicate the performance of the filter element. Therefore, it should be understood that the algorithms used by microprocessor 42 may be formatted to use other element condition parameters in addition to, or in place of, the (P). For instance, a flow rate (F) may be used by the algorithms to calculate filter element condition status (y). Flow rate (F) may be calculated using (P₁) and (P₂). Alternatively, flow rate (F) may be measured using mass flow transducer 61, which measures the mass flow in outlet passage 20. Because the viscosity and temperature of the fluid may affect the performance assessment of the filter element, monitoring system 33 may also include a temperature sensor 56 for gauging the fluid temperature (T) and/or a pH sensor 58 for gauging the fluid pH (H). An rpm sensor 60 may also be included for sensing the engine rpm (R). The algorithms may then be designed to use any combination of measurements (P₁), (P₂), (F), (T), (H) and (R) as filter condition parameters in the determination of element condition status (y).

Turning now to step 75 of FIGS. 4-5, after calculating element condition status (y), microprocessor 42 compares and matches element condition status (y) to preset element condition limits (L₁₋₇) stored in memory 44. Each preset element condition limit (L₁₋₇) represents a range of element condition status values that corresponds to a specific filter condition. For example, memory 44 in FIGS. 4-5 stores seven preset element condition limits including: (L₁) corresponding to algorithmic values (or filter condition status values) that exist when the element is missing; (L₂) corresponding to a new element condition; (L₃) corresponding to a 25% clogged element condition; (L₄) corresponding to 50% clogged element condition; (L₅) corresponding to 75% clogged element condition; (L₆) corresponding to 100% clogged element condition; and (L₇) corresponding to bypass element condition. It should be understood that the preset element condition limits (L₁₋₇) are exemplary and that any variety and any number of preset element condition limits may be stored in memory 44.

Referring now to step 76 of FIGS. 4-5, microprocessor 42 then creates element condition signal (x), which corresponds to the matching preset element condition limit. The element condition signal (x) is then transmitted from microprocessor 42 to indicating means 54, which may be a component of the OBD. As illustrated in step 77, indicating means 54 alerts the vehicle operator of the condition of the element by activating one or more on-board indicators, including: lights 54a, printed message display 54b, audio alarm 54c, and/or verbal message system 54d. For convenience, the on-board indicators 54a, 54b, 54c, 54d may be located on the vehicle dashboard where the vehicle operator can easily view and/or hear the alert. From this alert, the driver can monitor the actual condition and performance of the element. The driver can also decide when to replace the filter element based on actual necessity, rather than timed intervals. As illustrated in step 78, after informing the operator of the element condition, the process is then repeated 80 until engine shutdown 78 to provide continuous, real-time monitoring of the condition of the filter element.

Referring now to FIG. 5, memory 44 may also store preset fluid condition limits. For instance, memory 44 stores fluid condition limits H_{N}, which indicates a normal pH, and H_{L}, which indicates a low pH. As shown in steps 72 and 75, microprocessor 42 receives fluid pH measurement (H) from pH sensor 58 and compares the fluid pH (H) with the preset fluid condition limits (H_{N}, H_{L}) to determine the condition of the fluid. In step 76, microprocessor 42 creates fluid condition signal (x₁) and transmits signal (x₁) to indicating means 54, which alerts the operator as to the condition of the fluid. From this alert the driver can determine when to replace the fluid based on actual necessity.

Referring again to FIG. 5, monitoring system 33 may also include a calibration means, illustrated as steps 82-94. Calibration is initiated 82 by engaging a button or switch (not shown) promptly after the filter element and/or fluid is replaced. The calibration means may also include an Auto Element Change Recognition Program to initiate calibration in the event that the element is within new element condition limit (L₂). Incorporation of the Auto Element Change Recognition Program serves as a safety net in the event that the operator changes the element, but fails to engage the calibration button. The initiation of calibration signals microprocessor 42 to check the temperature (T) and the rpm (R) as shown in step 84. Microprocessor 42 waits for the temperature (T) and rpm (R) to reach calibration warm-up values stored in memory 44. The warm-up values for temperature (T) and rpm (R) are indicated as calibration baselines (b₁) and (b₂), respectively. It should be understood that calibration baselines (b₁) and (b₂) may also serve as warm-up (w₁) and (w₂). Microprocessor 42 compares temperature (T) to baseline temperature (b₁) and rpm (R) to baseline (b₂). When temperature (T) and rpm (R) reach baseline values (b₁) and (b₂), respectively, calibration continues.

Next, microprocessor 42 moves to step 86 in which measurements from inlet and outlet transducers 34, 36; temperature sensor 56, pH sensor 58, flow transducer 61, and rpm sensor 60 are received by microprocessor 42. As shown in step 88, microprocessor 42 then uses one or more element condition parameters derived from (P₁), (P₂), (F), (T), (R) and (H) to calculate a new element condition status (z). In step 90, microprocessor 42 then compares new element condition status (z) to the "missing element" preset element condition limit (L₁) to determine whether the filter element is missing. If new element condition status (z) matches preset element condition limit (L₁) a signal is sent 92 to indication means 54 instructing indication means 54 to alert the operator that the filter element is missing. If new element condition status (z) does not match (L₁), calibration continues to the next step 94 in which microprocessor 42 resets preset element condition limits (L₂-L₇) and/or fluid condition limits (H_{N}, H_{L}) based on the new element condition status (z). This calibration feature allows monitoring system 33 to be programmed to accommodate different brands of filter elements and manufacturing variations from element to element.

It is possible for the fluid to out-live the filter element or vice versa. In this case, the operator may replace one without replacing the other. Accordingly, the calibration means may be configured to have multiple, separate calibration initiation pathways. For example, calibration initiation 82 may be configured to have three pathways, one for resetting only the preset element condition limits (L₂-L₇), another for resetting only the preset fluid condition limits (H_{N}, H_{L}), and a third for resetting both the element condition limits (L₂-L₇) and the fluid condition limits (H_{N}, H_{L}).

As illustrated in FIG. 5, monitoring system 33 may also include timer 62, which is linked to microprocessor 42. In step 96, microprocessor 42 periodically determines whether element condition status (y) equals the preset element condition limit (L₇), which corresponds to element bypass condition. As shown in steps 96-99, if element condition status (y) equals element bypass condition (L₇), microprocessor 42 signals timer 62 to begin recording the amount of time during which the engine is operated in the element bypass condition. If element condition status (y) does not equal element bypass limit (L₇), the steps are repeated as illustrated at 98.

Timer 62 may be accessed and read by a vehicle service technician, to determine whether, and how long, the vehicle has been operated in the element bypass condition. If timer 62 indicates that the vehicle was operated for a significant amount of time in the element bypass condition, this can serve as evidence that the owner has nullified the warranty by failing to properly maintain the vehicle as required by the warranty. Consequently, the vehicle manufacturer can confidently refuse to cover the necessary repairs under the warranty and is spared the expense of paying faulty warranty claims. On the other hand, if timer 62 indicates that the vehicle was not operated in element bypass condition for a significant amount of time, this can serve as evidence that the owner complied with the maintenance guidelines set by the warranty and that the necessary engine repairs are clearly covered under the warranty. Consequently, the vehicle owner is spared the expense and inconvenience of arguing fault for the engine problems.

Timer 62 may also be configured to track the time passed or mileage traveled after installation of a new element. Once the preset element condition limits (L₂-L₇) are calibrated 94, microprocessor 42 signals timer 62 (step 95) to begin tracking the time passed or mileage traveled since the calibration. After a specified maximum amount of time has passed or mileage has been traveled, timer 62 sends a signal to indication means 54 directing it to alert the operator that the element and/or fluid should be replaced. The specified maximum amount of time or mileage traveled may be programmed to the engine manufacturer's specifications or the filter element specifications. This feature may be incorporated as a back-up in the event that a defective filter element causes the monitoring system to give inaccurate readings.

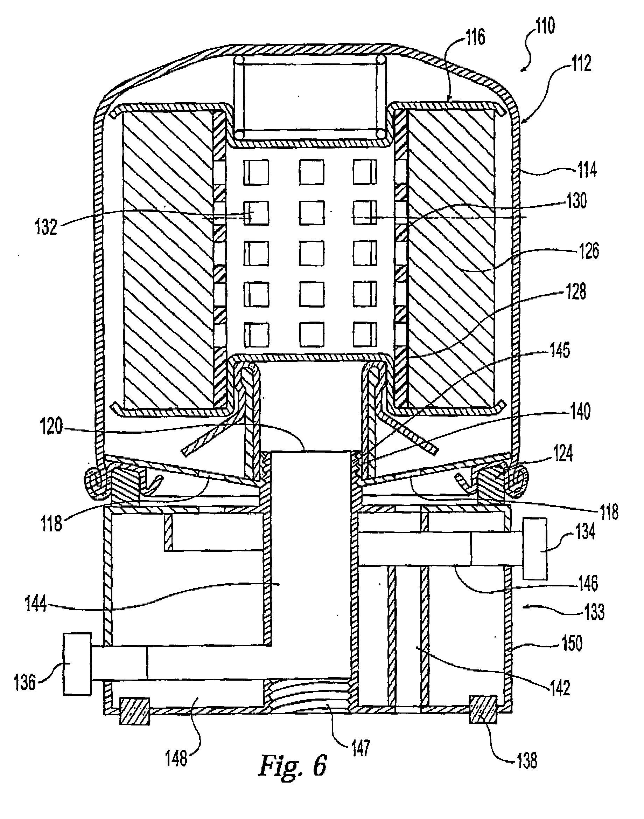

As discussed above, FIGS. 1-3 illustrate filter system 10 having an element monitoring system in association with a cartridge-type filter assembly 12. However, it should be understood that the present invention also contemplates a filter system having an element monitoring system in association with a spin-on fluid filter assembly. As shown in FIG. 6, oil filter system 110 generally includes spin-on oil filter assembly 112 and monitoring assembly 133. Filter assembly 112 generally includes housing 114, filter element assembly 116 disposed within housing 114, at least one inlet passage 118, and an outlet passage 120. Filter element assembly 116 includes element 126, which defines a bore (not shown) in communication with outlet passage 20. As shown in FIG. 6, element 126 may be optionally mounted about cylindrical center tube 128. Center tube 128 includes a center tube wall 130 having a plurality of openings 132, which communicate with the bore and, thereby, with the outlet passage 120.

Monitoring system 133 includes adapter 150 through which inlet conduit 142 and outlet conduit 144 extend. Inlet and outlet conduits 142, 144 communicate fluid between the engine (not shown) and inlet and outlet passages 118, 120, respectively. Monitoring system 133 also includes inlet pressure transducer 134 and outlet pressure transducer 136, which are mounted in orifices in adapter 150. Inlet and outlet pressure transducers 134, 136 are in respective communication with inlet and outlet conduits 142, 144 via corresponding pressure channels 146,148. Filter assembly 112 is mounted on adapter 150 by a threaded engagement between threaded filter end 145 of outlet conduit 144 and threaded portion 140 of outlet passage 120. Gasket 124 maintains a seal between adapter 150 and filter assembly 112. Outlet conduit 144 includes threaded portion 147 at the engine end of adapter 150 for mounting adapter 150 to a hollow bolt (not shown) on the engine. Gasket 13 provides a seal between the engine and adapter 150. Monitoring system 133 can be retrofit to existing spin-on oil filter assemblies and operates as described above and as illustrated in FIGS. 4 and 5.

Although FIGS. 1-3 and 5 illustrate a monitoring system in conjunction with an engine lubrication/oil filter assembly, it is contemplated that the monitoring system of the present invention may be used in conjunction with other filter assemblies, including but not limited to, transmission fluid filter assemblies, air filter assemblies, and fuel filter assemblies.

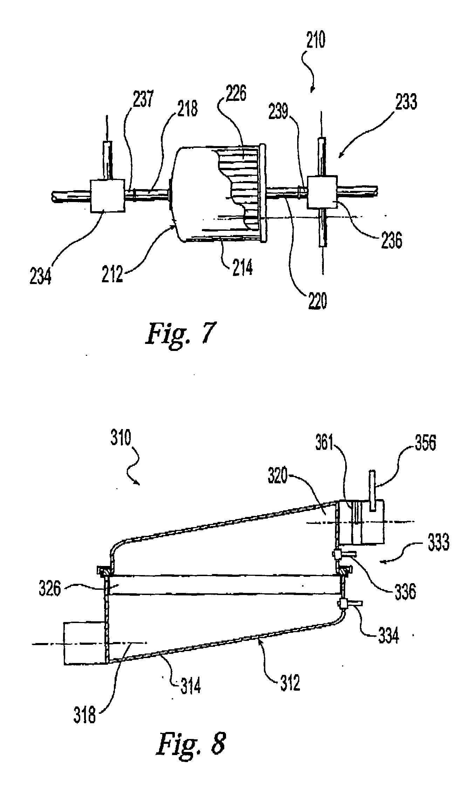

For example, FIG. 7 illustrates a fuel filter system 210 according to the present invention. Fuel filter system 210 generally includes fuel filter assembly 212 and fuel filter element monitoring assembly 233. Filter assembly 212 includes housing 214, filter element 226 disposed within housing 214, at least one inlet passage 218, and at least one outlet passage 220. Inlet passage 218 is in communication with outlet passage 220 through element 226. Monitoring assembly 233 includes inlet pressure transducer 234 and outlet pressure transducer 236 mounted on ends 237, 239, respectively, of passages 218, 220 and in communication with inlet and outlet passages 218, 220, respectively. Monitoring assembly 233 also includes microprocessor (not shown), which is linked to both inlet and outlet pressure transducers 234, 236. Monitoring system 233 may be operated as described above and as illustrated in FIGS. 4 and 5. Monitoring assembly 233 may also include a temperature sensor and/or other sensors providing additional element condition parameters. Fuel filter assembly 212 may also include a water trap (not shown) disposed within housing 214. Such water traps are known in the art and serve to remove water from the fuel. The water removed from the fuel accumulates in the water trap and is periodically drained. Monitoring assembly 233 may also include a water level sensor (not shown), which monitors the level of water in the water trap. The water level sensor is linked to the microprocessor and microprocessor, using the method described above and illustrated in FIGS. 4-5 with respect to the filter element condition, alerts the driver when the water needs to be drained.

FIG. 8 illustrates an air filter system 310 according to the present invention. Air filter system 310, generally, includes air filter assembly 312 and air filter element monitoring system 333. Filter assembly 312 includes housing 314, filter element 326 disposed within housing 314, inlet passage 318 and outlet passage 320. Inlet passage 318 and outlet passage 320 are in communication with one another through element 326. Monitoring assembly 333 includes inlet and outlet pressure transducers 334, 336 mounted on housing 314 and in communication with inlet and outlet passages 318, 320, respectively. Inlet and outlet pressure transducers 334, 336 are linked to a microprocessor (not shown), which operates, as described above and illustrated in FIGS. 4-5, to calculate the condition status of element 326- Monitoring assembly 333 also includes temperature sensor 356 for gauging an air temperature, which may be used by the microprocessor to calculate the element condition status. Monitoring assembly 333 also includes mass flow sensor 361, which gauges the flow of the air. The air flow measurement may be used by the microprocessor to calculate the element condition status.

While this invention has been described as having an exemplary design, the present invention may be further modified within the spirit and scope of this disclosure. This application is therefore intended to cover any variations, uses, or adaptations of the invention using its general principles. Further, this application is intended to cover such departures from the present disclosure as come within known or customary practice in the art to which this invention pertains.

## Claims

1. A filter system comprising:
a filter assembly including a housing, a filter element disposed within said housing, an inlet passage extending through said housing, and an outlet passage extending through said housing, said outlet passage in communication with said inlet passage through said filter element; and
a monitoring assembly including an inlet pressure transducer in communication with and gauging an inlet pressure measurement within said inlet passage, an outlet pressure transducer in communication with and gauging an outlet pressure measurement within said outlet passage, and a microprocessor linked to said inlet and outlet pressure transducers, wherein said microprocessor receives at least one element condition measurement and calculates an element condition status using said at least one element condition parameter.

2. The filter system of claim 1 wherein said at least one element condition parameter includes said inlet and outlet pressure measurements.

3. The filter system of claim 1 wherein said microprocessor receives said inlet and outlet pressure measurements and calculates a pressure differential between said inlet and outlet pressure measurements, and wherein said at least one element condition parameter includes said pressure differential.

4. The filter system of claim 1 wherein said microprocessor includes a memory, said memory stores at least one preset element condition limit, and wherein said microprocessor compares said element condition status to said at least one preset element condition limit to create an element condition signal.

5. The filter system of claim 4 further including a means for indicating said element condition signal, wherein said means for indicating said element condition signal receives said element condition signal from said microprocessor and generates an indication.

6. The filter system of claim 5 wherein said indication includes either a visual indication, an audio indication or a combination thereof.

7. The filter system of claim 1 wherein said monitoring assembly further comprises a mass flow transducer in communication with said outlet passage and linked to said microprocessor, wherein said flow transducer gauges a flow measurement within said outlet passage, said microprocessor receives said flow measurement; and wherein said at least one element condition parameter includes said flow measurement.

8. The filter system of claim 3 wherein said monitoring assembly further includes a temperature sensor in communication with one of either said inlet passage or said outlet passage and linked to said microprocessor, said temperature sensor gauges a temperature measurement within one of either said inlet passage or said outlet passage, said microprocessor receives said temperature measurement; and wherein said at least one element condition parameter includes said temperature measurement.

9. The filter system of claim 1 wherein said filter system is a fluid filter system; said monitoring assembly further including a pH sensor contacting the fluid and linked to said microprocessor, said pH sensor gauges a fluid pH measurement, said microprocessor receives said fluid pH measurement; and wherein said at least one element condition parameter includes said fluid pH measurement

10. The filter system of claim 9 wherein said memory stores at least one preset fluid condition limit; and wherein said microprocessor compares said fluid pH measurement to said at least one preset fluid condition limit to create a fluid condition signal.

11. The filter system of claim 9 wherein said monitoring assembly further includes a calibration means, said calibration means calibrating said at least one preset fluid condition limit when the fluid is replaced.

12. The filter system of claim 4 wherein said monitoring assembly further includes a calibration means, said calibration means calibrating said at least one preset element condition limit when said filter element is replaced.

13. The filter system of claim 4 wherein said monitoring assembly further includes a timer and said at least one preset element condition limit includes an element bypass limit, said timer measuring said time the fluid filter system is in use while said element condition status equals said element bypass limit.

14. A method for monitoring the condition of a filter element of a filter assembly comprising the steps of:
measuring an inlet pressure in an inlet passage of the filter assembly using an inlet pressure transducer in communication with the inlet passage;
measuring an outlet pressure in an outlet passage of the fluid filter assembly using an outlet pressure transducer in communication with the outlet passage; and
determining the differential pressure between the inlet pressure and the outlet pressure.

15. The method of claim 14 wherein said step of determining the differential pressure includes transmitting the inlet and outlet pressures to a microprocessor and using the microprocessor to calculate the differential pressure from the inlet and outlet pressures; and further including the step of calculating a fluid filter condition status using the microprocessor and at least one element condition parameter, said at least one element condition parameter including the differential pressure.

16. The method of claim 15 further comprising the steps of:
storing at least one preset element condition limit in a memory of the microprocessor;
creating an element condition signal by comparing the element condition status to the at least one preset element condition limit using the microprocessor, and
indicating the element condition signal by transmitting the element condition signal to an indication means, and the indication means forming an indication.

17. The method of claim 15 further comprising the step of measuring a flow rate using a flow transducer in communication with the outlet passage; and wherein the at least one element condition parameter further includes the flow rate.

18. The method of claim 15 further comprising the steps of:
measuring a temperature within one of either the inlet passage or the outlet passage using a temperature sensor; and
transmitting the temperature to the microprocessor, and wherein the at least one element condition parameter further includes the temperature.

19. The method of claim 15 wherein each of said steps are repeated to continuously monitor the condition of the element

20. A filter element condition monitoring assembly for a filter system having a housing, an element disposed within the housing, an inlet passage extending through the housing, and an outlet passage extending through the housing, comprising:
an inlet pressure transducer communicable with the inlet passage and adapted to measure an inlet pressure in the inlet passage;
an outlet pressure transducer communicable with the outlet passage and adapted to measure an outlet pressure in the outlet passage; and
a microprocessor linked to said inlet and outlet pressure transducers, wherein said microprocessor receives said inlet and outlet pressure and calculates an element condition status using said inlet and outlet pressures.
